Europäisches Patentamt

European Patent Office

Office européen des brevets

(11) Numéro de publication: **0 308 324 B1**

(12) **FASCICULE DE BREVET EUROPEEN**

(45) Date de publication de fascicule du brevet: **01.09.93** (51) Int. Cl.5: **G01S 13/86**, G01S 13/92

(21) Numéro de dépôt: **88402311.0**

(22) Date de dépôt: **14.09.88**

(54) **Cinémomètre à effet doppler de sécurité.**

(30) Priorité: **15.09.87 FR 8712787**

(43) Date de publication de la demande:
**22.03.89 Bulletin 89/12**

(45) Mention de la délivrance du brevet:
**01.09.93 Bulletin 93/35**

(84) Etats contractants désignés:
**BE CH DE LI NL**

(56) Documents cités:
**EP-A- 0 067 905**     **EP-A- 0 224 286**
**FR-A- 2 395 554**     **US-A- 3 010 102**
**US-A- 3 242 485**     **US-A- 3 902 172**
**US-A- 4 317 117**     **US-A- 4 635 058**

(73) Titulaire: **SOCIETE DE FABRICATION D'INS-
TRUMENTS DE MESURE (S.F.I.M.)
13, avenue Marcel Ramolfo-Garnier
F-91344 Massy Cédex(FR)**

(72) Inventeur: **Preti, Jean-Claude
4, Rue des Sablons
F-92140 Clamart(FR)**

(74) Mandataire: **Martin, Jean-Jacques et al
Cabinet REGIMBEAU 26, Avenue Kléber
F-75116 Paris (FR)**

## Description

La présente invention concerne un cinémomètre à effet Doppler de sécurité.

Les cinémomètres à effet Doppler sont de nos jours principalement utilisés par les forces de police afin de contrôler la vitesse des véhicules se déplaçant sur la voie publique et, le cas échéant, faire respecter les limitations correspondantes de vitesse en fonction des nécessités du trafic routier.

De tels dispositifs ont été décrits dans la demande de brevet français au nom de la demanderesse FR-A-2 279 113.

Dans ce type d'appareil, une onde électromagnétique est émise et réfléchie par le véhicule en mouvement dont on veut mesurer la vitesse et un signal Doppler est ainsi engendré à partir duquel la vitesse du véhicule est déterminée. Cette vitesse est déterminée à partir de la mesure directe de la durée d'une période du signal Doppler.

US-A-4 317 117 décrit un appareil du même type qui est conforme au préambule de la revendication 1.

Bien que ce type d'appareillage soit destiné en fait à assurer la sécurité publique, on assite de plus en plus à l'apparition sur le marché d'appareils détecteurs de cinémomètres dont l'usage abusif est susceptible de compromettre la sécurité publique. Ces appareils détecteurs ne présentent d'efficacité réelle que dans la mesure où leur grande sensibilité permet en fait à leur utilisateur de réduire suffisamment la vitesse de son véhicule avant détection sur le cinémomètre. L'efficacité de ces appareils détecteurs est accentuée compte tenu du fait que les cinémomètres actuels émettent soit un rayonnement continu, soit un rayonnement par impulsions à très haute fréquence de répétition. La consommation d'énergie électrique de tels cinémomètres est donc non négligeable, la consommation à l'émission représentant environ 80% de la consommation totale, compte tenu du fait que même à l'état de veille les cinémomètres actuels sont à l'état d'émission de l'onde électromagnétique.

La présente invention a pour but de remédier aux inconvénients précités par la mise en venue d'un cinémomètre dont le temps ou la durée d'émission est limité(e) au temps de présence du véhicule dans le faisceau d'émission de l'onde électromagnétique, l'émission précitée étant arrêtée en-deçà et au-delà.

Un autre objet de la présente invention est la mise en oeuvre d'un cinémomètre très difficilement détectable par des appareils détecteurs, compte tenu de la réduction très importante du temps effectif d'émission de ces cinémomètres, temps pendant lequel ceux-ci sont en fait vulnérables.

Un autre objet de la présente invention est la mise en oeuvre de cinémomètres de plus grande autonomie de fonctionnement, compte tenu de la réduction très importante de la consommation moyenne de ces derniers, même lorsque ceux-ci sont à l'état de veille pendant laquelle l'emission de l'onde électromagnétique est alors coupée.

Un autre objet de la présente invention est la mise en oeuvre d'un cinémomètre de sécurité permettant d'effectuer une discrimination des véhicules en fonction de leur dimension de défilement et de leur vitesse.

Le cinémomètre à effet Doppler objet de l'invention comprend des moyens d'émission-réception d'une onde électromagnétique et des moyens de calcul, à partir de la fréquence Doppler de l'onde électromagnétique, de la vitesse d'un véhicule se déplaçant dans le faisceau d'émission-réception des moyens d'emission-réception, ledit cinémomètre comportant en outre au moins un capteur passif, dont le lobe de réception recouvre le faisceau d'émission-réception desdits moyens d'émissionréception de l'onde électromagnétique, et des moyens d'enclenchement-déclenchement desdits moyens d'émission-réception de l'onde électromagnétique, lesdits lobe de réception et faisceau d'émission-réception étant centrés sur l'axe de visée desdits moyens d'émission-réception de l'onde électromagnétique et lesdits moyens d'enclenchement-déclenchement étant commandés par ledit capteur passif, caractérisé en ce que l'angle d'ouverture du lobe de réception dudit capteur passif est supérieur à l'angle d'ouverture du faisceau d'émission-réception de ladite onde électromagnétique, et en ce que lesdits moyens d'enclenchement-déclenchement desdits moyens d'émission-réception de l'onde électromagnétique permettent l'enclenchement de l'émission de ladite onde électromagnétique dès l'entrée du véhicule dans le lobe de réception dudit capteur passif et l'arrêt de l'émission de ladite onde électromagnétique dès la sortie du véhicule du lobe de réception dudit capteur passif.

Le cinémomètre objet de l'invention trouve application à la surveillance du trafic routier sur la voie publique, à la mesure et au contrôle de vitesse en temps réel de véhicules en compétition automobile, et dans tout domaine de mesure de vitesse de mobiles.

L'invention sera mieux comprise à la lecture de la description et à l'observation des dessins ci-après, dans lesquels :
- la figure 1 représente un schéma synoptique du cinémomètre à effet Doppler, objet de l'invention,
- la figure 2a représente une vue d'un détail de réalisation de l'antenne d'émission du cinémomètre objet de l'invention,

- la figure 2b représente une vue en coupe selon la ligne A-A de la figure 2a,
- la figure 3 représente de manière schématique des diagrammes de rayonnement en azimut du faisceau électromagnétique FOEM et du lobe de réception LR du capteur passif,
- la figure 4 représente un schéma synoptique représentatif des moyens d'enclenchement déclenchement de l'émission de l'onde électromagnétique,
- la figure 5 représente une page écran des moyens de calcul du cinémomètre à effet Doppler selon l'invention.

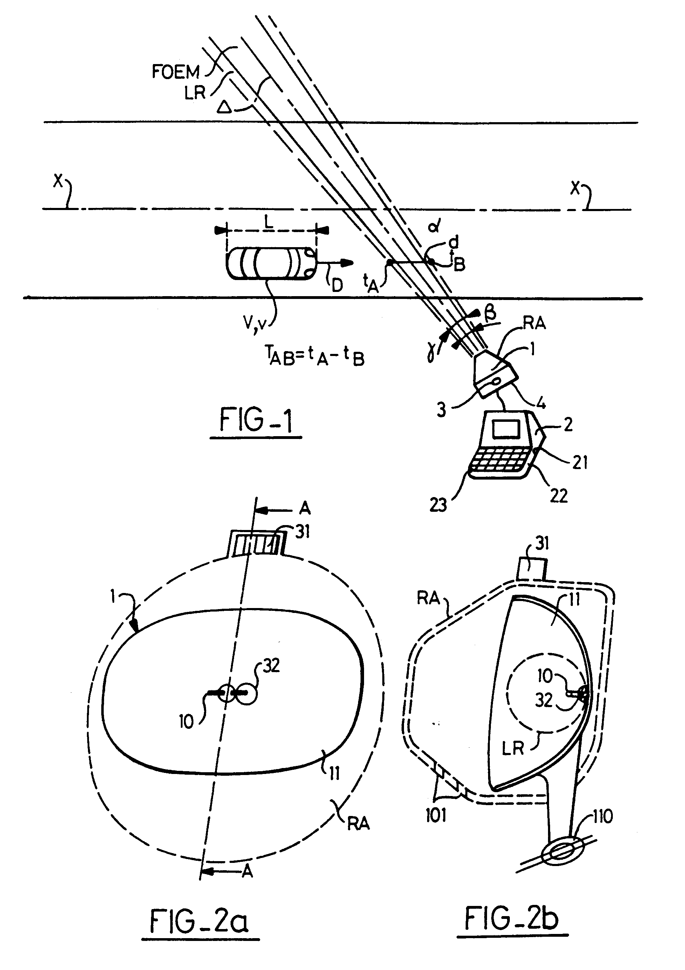

Le cinémomètre à effet Doppler objet de l'invention sera tout d'abord décrit en liaison avec la figure 1.

Conformément à la figure 1 précitée, le cinémomètre à effet Doppler objet de l'invention comprend des moyens 1 d'émission-réception des ondes électro-magnétiques et des moyens 2 de calcul à partir de la fréquence Doppler de l'onde électromagnétique de la vitesse v d'un véhicule V se déplaçant dans le faisceau FOEM d'émission-réception des moyens d'émission-réception 1 précités. Ainsi que nous le constaterons sur la figure 1, le véhicule V se déplace dans la direction de déplacement D sur une chaussée d'axe longitudinal X-X et le faisceau d'émission-réception des moyens d'émission-réception 1 présente un axe longitudinal correspondant à l'axe Δ de visée des moyens d'émission-réception 1 précités. Des moyens d'émission-réception de l'onde électromagnétique 1 précédemment citée sont disposés de façon que l'axe de visée Δ intercepte la totalité de la voie de déplacement du véhicule V et son intersection avec l'axe longitudinal X-X de la chaussée forme un angle aigu α de valeur déterminée.

Selon un aspect particulièrement avantageux du cinémomètre à effet Doppler objet de l'invention, celui-ci comporte en outre, au moins un capteur passif 3 dont le lobe de réception LR recouvre le faisceau d'émission-réception FOEM des moyens d'émission-réception 1 de l'onde électromagnétique. On comprendra bien entendu que la notion de recouvrement doit être comprise uniquement dans le sens de déplacement D du véhicule V ainsi qu'il sera expliqué ci-après ultérieurement dans la description.

En outre, des moyens 4 d'enclenchement-déclenchement des moyens d'émission-réception 1 de l'onde électro-magnétique sont prévus, ces moyens d'enclenchement-déclenchement étant commandés par le capteur passif 3.

Selon une caractéristique avantageuse du dispositif cinémomètre à effet Doppler objet de l'invention, les moyens d'enclenchement-déclenchement 4 des moyens d'émission-réception 1 de l'onde électromagnétique permettent l'enclenchement de l'émission de cette onde électromagnétique dès l'entrée du véhicule dans le lobe de réception LR du capteur passif 3. Ils peuvent permettre également de façon non limitative l'arrêt de l'émission de l'onde électromagnétique dès la sortie du véhicule V du lobe de réception LR du capteur passif 3. Bien entendu, la notion de recouvrement précitée concerne alors le recouvrement du faisceau d'onde électromagnétique FOEM sur des hauteurs par rapport au sol au moins égales à la hauteur moyenne de la partie avant et/ou de la partie arrière d'un véhicule V correspondant.

Afin d'obtenir le recouvrement précité, l'angle d'ouverture γ du lobe de réception LR du capteur 3 peut être avantageusement pris supérieur à l'angle d'ouverture β du faisceau d'émission-réception SEEM des moyens d'émission-réception 1 de l'onde électromagnétique.

Ainsi que l'on a en outre représenté en figure 1, le lobe de réception LR et le faisceau d'émission-réception FOEM sont centrés sur l'axe de visée Δ des moyens d'émission-réception 1 de l'onde électromagnétique.

En outre, le lobe de réception LR du capteur passif 1 présente une sensibilité ou portée en distance supérieure ou égale à celle des moyens d'émission-réception de l'onde électro-magnétique. A titre d'exemple non limitatif, la portée en distance du lobe de réception LR du capteur passif 3 pourra être d'une centaine de mètres ce qui est suffisant pour assurer la surveillance d'une chaussée de largeur habituelle ou d'une piste de compétition automobile.

Dans un mode de réalisation avantageux, le lobe de réception LR du capteur passif 3 présente un angle d'ouverture gamma de l'ordre de 10° et l'angle d'ouverture du faisceau d'onde électromagnétique FOEM présente un angle d'ouverture de l'ordre de 8°.

A titre d'exemple non limitatif, le capteur passif 3 peut être constitué par un capteur de rayonnement infra-rouge, ce type de capteur pouvant par exemple correspondre à un capteur commercialisé par la société SIEMENS sous la référence PID11.

Afin d'améliorer les performances du cinémomètre à effet Doppler objet de l'invention, et en particulier améliorer les conditions de sécurité de fonctionnement de ce type d'appareil, celui-ci peut avantageusement comporter un premier capteur passif et un deuxième capteur passif, les premier et deuxième capteurs passifs étant constitués par des transducteurs sensibles à des paramètres physiques différents.

Un mode de réalisation avantageux d'un cinémomètre à effet Doppler comportant un premier capteur passif 31 et un deuxième capteur passif 32 est représenté respectivement en figure 2a, laquelle est une vue frontale de la partie antenne constituant les moyens d'émissions-réception de l'onde électromagnétique 1 et sur la figure 2b, laquelle est une représentation en coupe selon la ligne de coupe A-A de la figure 2a. Sur les figures précitées, le premier capteur passif est noté 31 et le deuxième capteur passif est noté 32.

Selon l'exemple des figures 2a et 2b, le premier capteur passif 31 peut être constitué par un capteur de rayonnement infra-rouge et le deuxième capteur passif 32 peut être constitué par un microphone.

Ainsi qu'on l'a représenté en figures 2a et 2b, les moyens 1 d'émission-réception de l'onde électromagnétique peuvent comporter une source d'émission-réception 10 du type source primaire, et un récepteur 11 formant antenne. La source primaire 10 peut être constituée par exemple par un dipole et le récepteur 11 formant antenne peut être constitué par un réflecteur de type paraboloïde.

Sur la figure 2a et sur la figure 2b, on a représenté les moyens d'émission-réception 1 et, en particulier, la source primaire 10 et le réflecteur formant antenne 11 protégé par un randome RA lequel est réputé supprimé sur les figures 2a et 2b afin de permettre la représentation de la source primaire et du réflecteur 11. En conséquence, le randome RA est représenté en pointillés sur les figures 2a et 2b.

Ainsi qu'on pourra le constater sur les figures précitées, la source auxiliaire 31, première source auxiliaire, peut avantageusement être disposée au sommet du randome RA symétriquement par rapport à la ligne de coupe A-A de la figure 2a, cette disposition permettant le centrage du lobe de réception LR sur l'axe de visée del des moyens d'émission-réception et en particulier de l'antenne.

Ainsi qu'on le remarquera également en figures 2a et 2b, le microphone constituant le deuxième capteur passif 32 est alors avantageusement situé au foyer du récepteur 11. Le microphone constituant le deuxième détecteur passif 32 peut alors avantageusement être constitué par un microphone omnidirectionnel dont le lobe de réception LRM est représenté en pointillés en figure 2b.

Afin de permettre un couplage suffisant du deuxième capteur passif 32 constitué par le microphone omnidirectionnel, le radum RA peut être muni à sa partie inférieure d'évents 101 permettant une transmission convenable des bruits extérieurs au microphone 32.

En outre, de manière avantageuse, le réflecteur 11 peut être monté sur un pied orientable par l'intermédiaire d'une rotule 110.

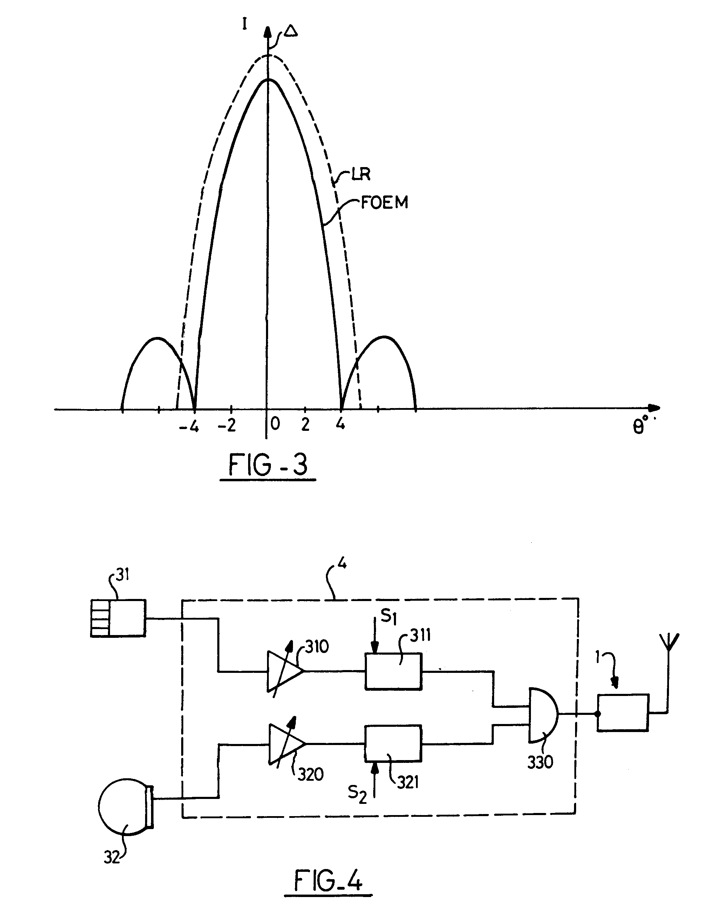

Sur la figure 3, on a représenté un diagramme dit diagramme de rayonnement du faisceau d'onde électromagnétique FOEM et du lobe de réception LM du capteur passif 3 constitué par exemple le premier capteur passif 31 lorsque celui-ci est fermé par un capteur de rayonnement infra-rouge. Bien entendu, l'axe des abscisses du diagramme de la figure 3 est gradué en valeur d'angle d'azimut par rapport à la direction d'axe de visée delta des moyens d'émission-réception 1 et l'axe des ordonnées est gradué en intensité d'émission.

Bien entendu, l'axe des ordonnées correspond à un angle d'azimut nul soit à la direction de l'axe de visée $\Delta$. Le recouvrement du faisceau d'onde électromagnétique FOEM est ainsi assuré pour le lobe principal de celui-ci par le lobe de réception LM du capteur passif 31 constitué par le détecteur de rayonnement infra-rouge ainsi que représenté en figure 3.

Une description plus détaillée des moyens 4 d'enclenchement-déclenchement des moyens 1 d'émission-réception de l'onde électromagnétique sera donnée en liaison avec la figure 4.

Selon la figure 4 précitée, les bornes de sortie du premier 31 et du deuxième 32 détecteurs passifs sont connectées au moyen d'enclenchement-déclenchement 4 des moyens d'émission-réception 1 de l'onde électromagnétique par l'intermédiaire d'une porte ET 330. Bien entendu, la liaison de la sortie de chaque capteur passif 31,32 avec la porte ET 330 peut être effectuée ainsi que représenté en figure 4 de manière avantageuse par l'intermédiaire respectivement d'amplificateurs à gain ajustable 310,320 et de circuits de mise en forme 311 et 321, lesquels sont alors directement connectés aux entrées de la porte ET 330. De façon non limitative, les circuits de mise en forme 331 et 321 peuvent être constitués par des circuits déclencheurs à seuil, les valeurs de seuil étant notées $S_1$ et $S_2$ et pouvant être ajustées en fonction des conditions opératoires du cinémomètre objet de l'invention.

Ainsi, dans le mode de réalisation des figures 2a, 2b et 4 le cinémomètre objet de l'invention permet d'améliorer la sécurité de déclenchement de celui-ci par le couplage des deux détecteurs passifs 31 et 32 par la fonction ET précitée de deux détections sur des phénomènes physiques différents. En outre, il est ainsi possible de réserver ainsi le déclenchement de ce véhicule V de vitesse v relativement importante telle que les véhicules à moteur à combustion interne lesquels engendrent un bruit suffisant pour permettre l'apparition d'un signal logique de déclenchement en sortie de la chaîne constituée par l'amplificateur à gain réglable 320 et le circuit de mise en forme 321 en fonction de la valeur de seuil $S_2$ choisie.

Afin d'obtenir une plus grande souplesse d'utilisation du cinémomètre à effet Doppler objet de l'invention, et d'obtenir notamment une gestion statistique des mesures de vitesse en fonction du type de véhicule surveillé, celui-ci peut comprendre en outre de manière avantageuse non limitative des moyens de discrimination 21 des véhicules en fonction de leur dimension de défilement L et de leur vitesse v. Ainsi qu'on la représenté en figure 1 notamment, les moyens de discrimination 21 des véhicules en fonction de leur dimension de défilement L et de leur vitesse sont constitués avantageusement par un programme muni de sous-programmes convenablement adaptés lesquels sont implantés dans les moyens de calcul 2 ainsi qu'ils sera décrit ci-après.

Ainsi, les moyens de discrimination 21 peuvent comporter avantageusement des moyens de calcul constitués par un sous-programme de calcul 210 de la longueur de défilement L d'un véhicule de type déterminé.

La propriété d'un radar à effet Doppler est de fournir, lorsque un véhicule V se déplace dans le faisceau d'onde électromagnétique FOEM, un signal périodique dont chaque alternance représente un déplacement radial du véhicule, c'est-à-dire selon la direction de l'axe de visée Δ, égal à la demie longueur d'onde λ d'émission de l'onde électromagnétique.

Le nombre des alternances ou périodes de ce signal pendant la traversée du faisceau d'onde électromagnétique dans le véhicule est totalement indépendant de la vitesse de celui-ci et ne dépend que de la longueur de défilement du véhicule dans le faisceau FOEM.

Conformément à l'invention, la longueur de défilement L du véhicule dans le faisceau FOEM vérifie la relation :

$$L = \frac{2 N \lambda}{2 \cos \alpha} - d$$

Dans cette relation :
- λ représente la longueur d'onde d'émission de l'onde électromagnétique,
- N représente le nombre de périodes du signal Doppler pendant la traversée du faisceau d'onde électromagnétique par le véhicule V,
- α représente l'angle formé par la direction de défilement D du véhicule par rapport à l'axe de visée Δ de l'onde électromagnétique, c'est-à-dire sensiblement la direction formée par l'axe X-X de la chaussée et la direction de visée Δ des moyens d'émission de l'onde électromagnétique,
- d représente la dimension moyenne du faisceau d'onde électromagnétique FOEM dans la direction de déplacement D du véhicule V.

Bien entendu, compte tenu de la faible différence d'ouverture du faisceau d'onde électromagnétique FOEM et du lobe de réception LR dans la direction D, leur demi-angle d'ouverture différant au plus de 1° sensiblement, la distance d pourra également être considérée comme la dimension moyenne du lobe de réception LR du capteur passif 3 dans la direction de déplacement D du véhicule V.

Ainsi qu'on l'a en outre représenté en figure 1, le cinémomètre à effet Doppler objet de l'invention comporte également des moyens 22 de mesure du temps de défilement $T_{AB}$ du véhicule V dans le faisceau d'onde électromagnétique FOEM entre les instants d'entrée $t_A$ et de sortie $t_B$ du lobe de réception LR du capteur passif 3 du véhicule V. Bien entendu, ces moyens 22 de mesure du temps peuvent avantageusement être constitués par un programme de mesure de temps lequel sur déclenchement des moyens d'émission-réception 1 par le signal délivré par exemple par la porte ET 330 ou par le capteur passif 3 dans le cas où un seul capteur passif est utilisé, par un programme de mesure de temps lequel déclenche par exemple la fonction horloge connue en langage anglo-saxon sous le nom de fonction "Timer" des moyens de calcul 2 lesquels peuvent être constitués par exemple par un microordinateur.

En outre, le cinémomètre à effet Doppler objet de l'invention peut également comporter des moyens 23 de calcul de la dimension réelle d du faisceau d'onde électromagnétique FOEM laquelle est assimilée à la dimension réelle d du lobe de réception LR. Ces moyens de calcul permettent les calculs de la dimension réelle d précitée à partir d'une part du temps de défilement $T_{AB}$ et de la vitesse estimée v ou mesurée v du véhicule V. Ces moyens de calcul 23 peuvent à leur tour être constitués par un sous-programme dans lequel le produit du temps de défilement $T_{AB}$ et de la vitesse v est effectué.

Bien entendu, l'ensemble des programmes et sous-programmes précités ne sera pas décrit en détail car ils font appel à des techniques de programmation tout à fait classiques à la portée de l'homme de métier. Ces programmes peuvent être directement implantés en mémoire morte des moyens de calcul 2 ou micro-ordinateur ou bien chargé directement en mémoire centrale de celui-ci à partir de mémoires de masse non représentées au dessin.

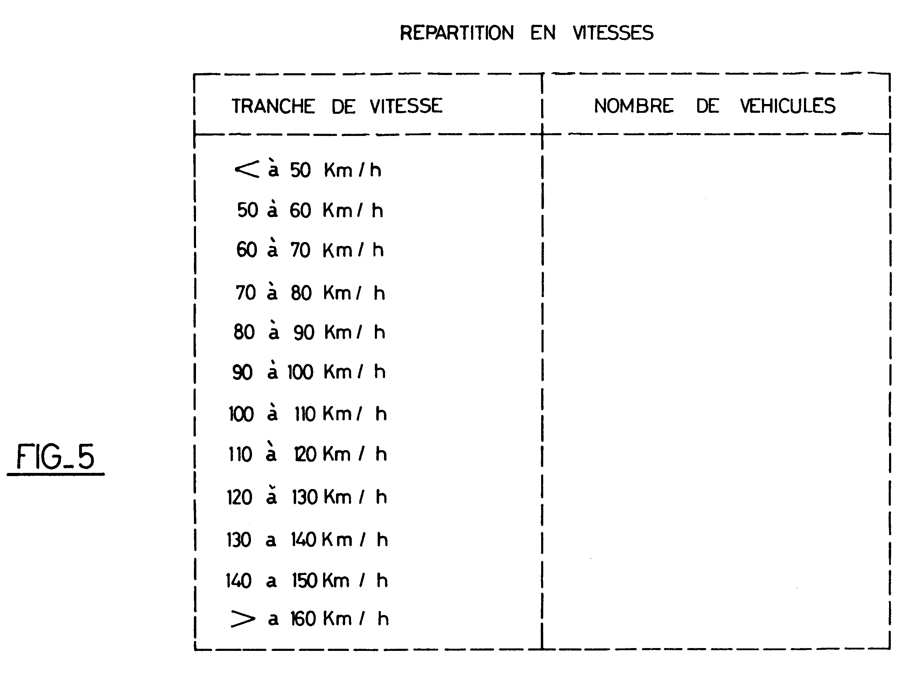

Afin de faciliter l'utilisation du dispositif pour l'opérateur, les moyens de discrimination 21 du véhicule en vitesse peuvent comporter avantageusement un programme de tri 210 et de répartition des véhicules en tranches de vitesse d'amplitude déterminée entre un seuil de vitesse inférieure et un seuil de vitesse supérieure. Ce programme de tri ne fera pas l'objet d'une description détaillée car il peut être constitué par tout programme de tri classique mais il pourra avantageusement comporter une page écran au moins telle que représentée en figure 5 dans laquelle une colonne comportant douze tranches de vitesses différentes est prévue et une deuxième colonne comportant le nombre de véhicules correspondant est prévue. Bien entendu, la page écran précitée, peut être intégrée dans un programme de type "menu" lequel peut inciter l'opérateur à modifier les plages et tranches de vitesse ou l'amplitude de celles-ci en fonction des conditions de trafic considérées.

On a ainsi décrit un cinémomètre à effet Doppler particulièrement performant dans la mesure où celui-ci à l'état de veille n'émet aucune onde électromagnétique à l'état continu ou à l'état d'impulsion de fréquence de récurrence très élevée. Ceci permet d'une part d'assurer une meilleure discrétion de ce type d'appareil vis-à-vis des usagers dans la mesure où l'émission d'onde électromagnétique seule susceptible d'être détectée est limitée au seul instant de détection du véhicule dont on veut mesurer la vitesse instantanée. En outre, la réduction des temps d'émission par la suppression de cette émission à l'état de veille permet de réduire fortement la consommation en énergie électrique de ce type d'appareillages, ce qui a pour effet bien entendu d'augmenter l'autonomie de ces derniers.

**Revendications**

1. Cinémomètre à effet Doppler, comprenant des moyens (1) d'émission-réception d'une onde électromagnétique et des moyens (2) de calcul, à partir de la fréquence Doppler de l'onde électromagnétique, de la vitesse (v) d'un véhicule (V) se déplaçant dans le faisceau (FOEM) d'émission-réception desdits moyens d'émission-réception, ledit cinémomètre comportant en outre au moins un capteur passif (3), dont le lobe de réception (LR) recouvre le faisceau d'émission-réception (FOEM) desdits moyens d'émission-réception (1) de l'onde électromagnétique, et des moyens (4) d'enclenchement-déclenchement desdits moyens (1) d'émission-réception de l'onde électromagnétique, lesdits lobe de réception (LR) et faisceau d'émission-réception (FOEM) étant centrés sur l'axe de visée (Δ) desdits moyens d'émission-réception de l'onde électromagnétique et lesdits moyens d'enclenchement-déclenchement étant commandés par ledit capteur passif, caractérise en ce que l'angle d'ouverture ($\gamma$) du lobe de réception (LR) dudit capteur passif (3) est supérieur à l'angle d'ouverture ($\beta$) du faisceau d'émission-réception (1) de ladite onde électromagnétique, et en ce que lesdits moyens d'enclenchement-déclenchement desdits moyens d'émission-réception de l'onde électromagnétique permettent l'enclenchement de l'émission de ladite onde électromagnétique dès l'entrée du véhicule dans le lobe de réception dudit capteur passif et l'arrêt de l'émission de ladite onde électromagnétique dès la sortie du véhicule du lobe de réception dudit capteur passif.

2. Cinémomètre à effet Doppler selon la revendication 1, caractérisé en ce que le lobe de réception (LR) dudit capteur passif (3) présente une sensibilité ou portée en distance supérieure ou égale à celle des moyens d'émission-réception de l'onde électromagnétique.

3. Cinémomètre à effet Doppler selon l'une des revendications 1 ou 2, caractérisé en ce que le lobe de réception (LR) dudit capteur passif (3) présente un angle d'ouverture de 10°.

4. Cinémomètre à effet Doppler selon l'une des revendications 1 à 3, caractérisé en ce que ledit capteur passif (3) est un capteur de rayonnement infrarouge.

5. Cinémomètre à effet Doppler selon l'une des revendications 1 à 3, caractérisé en ce qu'il comporte un premier capteur passif (31) et un deuxième capteur passif (32), les premier et deuxième capteurs passifs étant constitués par des transducteurs sensibles à des paramètres physiques différents.

6. Cinémomètre à effet Doppler selon la revendication 5, caractérisé en ce que le premier capteur passif (31) étant constitué par un capteur de rayonnement infrarouge, ledit deuxième capteur passif (32) est constitué par un microphone.

7. Cinémomètre à effet Doppler selon la revendication 6, caractérisé en ce que lesdits moyens (1) d'émission-réception de l'onde électromagnétique comportant une source d'émission-réception (10) et un réflecteur (11) formant antenne de type paraboloïde, ledit microphone est un microphone omnidirectionnel placé au foyer du réflecteur.

8. Cinémomètre à effet Doppler selon l'une des revendications 5 à 7, caractérisé en ce que les bornes de sortie du premier (31) et du deuxième (32) détecteurs passifs sont connectées auxdits moyens d'enclenchement-déclenchement de l'onde électromagnétique par l'intermédière d'une porte ET (330).

9. Cinémomètre à effet Doppler selon l'une des revendications précédentes, caractérisé en ce qu'il comporte en outre : des moyens de discrimination des véhicules en fonction de leur dimension de défilement (L) et de leur vitesse (v).

10. Cinémomètre à effet Doppler selon la revendication 9 , caractérisé en ce que lesdits moyens de discrimination comportent des moyens de calcul de ladite longueur de défilement L laquelle vérifie la relation :

$$L = \frac{2\,N\,\lambda}{2\,\cos\,\alpha} - d \quad .$$

où

- $\lambda$ représente la longueur d'onde d'émission de l'onde électromagnétique,
- N représente le nombre de périodes du signal Doppler pendant la traversée du faisceau d'onde électromagnétique par le véhicule,
- $\alpha$ représente l'angle formé par la direction de défilement du véhicule par rapport à l'axe de visée de l'onde électromagnétique,
- d représente la dimension moyenne du faisceau d'onde électromagnétique (FOEM) du lobe de réception (LR) dans la direction de déplacement (D) du véhicule (V).

11. Cinémomètre à effet Doppler selon l'une quelconque des revendications précédentes, caractérisé en ce qu'il comprend en outre :

. des moyens (22) de mesure du temps de défilement ($T_{AB}$) dudit véhicule dans le faisceau d'onde électromagnétique entre les instants d'entrée ($t_A$) dans et de sortie ($t_B$) du lobe de réception du capteur passif dudit véhicule,

. des moyens (23) de calcul de la dimension réelle du faisceau d'onde électromagnétique (FOEM) ou du lobe de réception (LR) dans la direction de déplacement (D) du véhicule (V).

12. Cinémomètre à effet Doppler selon l'une des revendications 10 ou 11, caractérisé en ce que lesdits moyens de discrimination du véhicule en vitesse comportent un programme de tri et de répartition des véhicules en tranches de vitesse d'amplitude déterminée entre un seuil de vitesse inférieur et un seuil de vitesse supérieur.

**Claims**

1. Doppler speed measurer, comprising means (1) for transmitting/receiving an electromagnetic wave and means (2) for computing, from the Doppler frequency of the electromagnetic wave, the speed (v) of a vehicle (V) moving in the transmission/reception beam pattern (FOEM) of the said transmission/reception means, the said speed measurer also including at least one passive sensor (3), the reception lobe (LR) of which covers the transmission/reception beam pattern (FOEM) of the said means (1) for transmitting/receiving the electromagnetic wave, and means (4) for switching on and off the said means (1) for transmitting/receiving the electromagnetic wave, the said reception lobe (LR) and transmission/reception beam pattern (FOEM) being aligned on the sighting axis ($\Delta$) of the said means for transmitting/receiving the electromagnetic wave and the said means of switching on and off being controlled by the said passive sensor, characterised in that the aperture angle ($\gamma$) of the reception lobe (LR) of the said passive sensor (3) is greater than the aperture angle ($\beta$) of the transmission/reception beam pattern (1) of the said electromagnetic wave, and in that the said means for switching on and off the said means for transmitting and receiving the electromagnetic wave enable the transmission of the said electromagnetic wave to be triggered as soon as the vehicle enters the reception lobe of the said passive sensor and the transmission of the said electromagnetic wave to be stopped as soon as the vehicle leaves the reception lobe of the said passive sensor.

2. Doppler speed measurer according to Claim 1, characterised in that the reception lobe (LR) of the said passive sensor (3) has a sensitivity or range equal to or greater than that of the means for transmitting/receiving the electromagnetic wave.

3. Doppler speed measurer according to one of Claims 1 or 2, characterised in that the reception lobe (LR) of the said passive sensor (3) has an aperture angle of 10°.

4. Doppler speed measurer according to one of Claims 1 to 3, characterised in that the said passive sensor (3) is an infrared radiation sensor.

**5.** Doppler speed measurer according to one of Claims 1 to 3, characterised in that it has a first passive sensor (31) and a second passive sensor (32), the first and second passive sensors consisting of transducers sensitive to different physical parameters.

**6.** Doppler speed measurer according to Claim 5, characterised in that, the first passive sensor (31) consisting of an infrared-radiation sensor, the said second passive sensor (32) consists of a microphone.

**7.** Doppler speed measurer according to Claim 6, characterised in that, the said means (1) for transmitting/receiving the electromagnetic wave including a transmission/reception source (10) and a reflector (11) forming an aerial of the dish type, the said microphone is an omnidirectional microphone positioned at the focus of the reflector.

**8.** Doppler speed measurer according to one of Claims 5 to 7, characterised in that the output terminals of the first (31) and second (32) passive sensors are connected to the said means for switching on and off the electromagnetic wave through an AND gate (330).

**9.** Doppler speed measurer according to one of the preceding claims, characterised in that it also includes means for distinguishing vehicles according to their dimensions in the direction of travel (L) and their speed (v).

**10.** Doppler speed measurer according to Claim 9, characterized in that the said distinguishing means include means for calculating the said length in the direction of travel L which satisfies the equation:

$$L = \frac{2\,N\,\lambda}{2\,\cos\,\alpha}\ -\ d$$

where

- $\lambda$ represents the transmission wavelength of the electromagnetic wave,
- N represents the number of periods of the Doppler signal during the time when the vehicle is passing through the electromagnetic wave beam pattern,
- $\alpha$ represents the angle formed by the direction of travel of the vehicle with respect to the sighting axis of the electromagnetic wave,

- d represents the mean dimension of the electromagnetic wave beam pattern (FOEM) of the reception lobe (LR) in the direction of movement (D) of the vehicle (V).

**11.** Doppler speed measurer according to any one of the preceding claims, characterized in that it also comprises:
- . means (22) for measuring the travel time ($T_{AB}$) of the said vehicle in the electromagnetic wave beam pattern between the times when the said vehicle enters ($t_A$) and leaves ($t_B$) the reception lobe of the passive sensor,
- . means (23) for calculating the actual dimension of the electromagnetic wave beam pattern (FOEM) or reception lobe (LR) in the direction of movement (D) of the vehicle (V).

**12.** Doppler speed measurer according to one of Claims 10 or 11, characterized in that the said means for distinguishing the vehicle by speed include a program for sorting and allocating vehicles into speed ranges of a given size between a lower speed threshold and an upper speed threshold.

**Patentansprüche**

**1.** Dopplereffekt-Geschwindigkeitsmeßgerät, welches eine Einrichtung (1) zum Senden/Empfangen einer elektromagnetischen Welle und eine Einrichtung (2) zum Berechnen der Geschwindigkeit (v) eines sich in dem Sende/Empfangs-Strahlbündel (FOEM) der Sende/Empfangseinrichtung bewegenden Fahrzeugs (V) auf der Grundlage der Dopplerfrequenz der elektromagnetischen Welle umfaßt, wobei dieses Geschwindigkeitsmeßgerät außerdem mindestens einen passiven Aufnehmer (3), dessen Empfangskeule (LR) das Sende/Empfangs-Strahlbündel (FOEM) der Einrichtung (1) zum Senden/Empfangen der elektromagnetischen Welle überdeckt, und eine Einkoppel/Auskoppeleinrichtung (4) für die Einrichtung (1) zum Senden/Empfangen der elektromagnetischen Welle umfaßt, wobei die Empfangskeule (LR) und das Sende/Empfangs-Strahlbündel (FOEM) bezüglich der Visierachse (Δ) der Einrichtung zum Senden/Empfangen der elektromagnetischen Welle zentriert sind und die Einkoppel/Auskoppeleinrichtung durch den passiven Aufnehmer gesteuert wird, dadurch gekennzeichnet, daß der Öffnungswinkel ($\gamma$) der Empfangskeule (LR) des passiven Aufneh-

mers (3) größer als der Öffnungswinkel (β) des Sende/Empfangs-Strahlbündels (1) der elektromagnetischen Welle ist und daß die Einkoppel/Auskoppeleinrichtung für die Einrichtung zum Senden/Empfangen der elektromagnetischen Welle das Einkoppeln der Emission der elektromagnetischen Welle beim Eintritt des Fahrzeugs in die Empfangskeule des passiven Aufnehmers und das Beenden der Emission der elektromagnetischen Welle beim Verlassen der Empfangskeule des passiven Aufnehmers durch das Fahrzeug gestattet.

2. Dopplereffekt-Geschwindigkeitsmeßgerät nach Anspruch 1, dadurch gekennzeichnet, daß die Empfangskeule (LR) des passiven Aufnehmers (3) eine Empfindlichkeit oder Reichweite hinsichtlich der Entfernung aufweist, die größer oder gleich derjenigen der Einrichtung zum Senden/Empfangen der elektromagnetischen Welle ist.

3. Doppler-Geschwindigkeitsmeßgerät nach einem der Ansprüche 1 oder 2, dadurch gekennzeichnet, daß die Empfangskeule (LR) des passiven Aufnehmers (3) einen Öffnungswinkel von 10° aufweist.

4. Dopplereffekt-Geschwindigkeitsmeßgerät nach einem der Ansprüche 1 bis 3, dadurch gekennzeichnet, daß der passive Aufnehmer (3) ein Infrarotempfänger ist.

5. Dopplereffekt-Geschwindigkeitsmeßgerät nach einem der Ansprüche 1 bis 3, dadurch gekennzeichnet, daß es einen ersten passiven Aufnehmer (31) und einen zweiten passiven Aufnehmer (32) umfaßt, wobei der erste und zweite passive Aufnehmer aus Meßwandlern bestehen, die für verschiedene physikalische Parameter empfindlich sind.

6. Dopplereffekt-Geschwindigkeitsmeßgerät nach Anspruch 5, dadurch gekennzeichnet, daß der erste passive Aufnehmer (31) aus einem Infrarotempfänger besteht und der zweite passive Aufnehmer (32) aus einem Mikrophon besteht.

7. Dopplereffekt-Geschwindigkeitsmeßgerät nach Anspruch 6, dadurch gekennzeichnet, daß die Einrichtung (1) zum Senden/Empfangen der elektromagnetischen Welle eine Sende/Empfangs-Quelle (10) und einen Reflektor (11) umfaßt, der eine Parabolantenne bildet, und das Mikrophon ein ungerichtetes Mikrophon ist, das am Brennpunkt des Reflektors angeordnet ist.

8. Dopplereffekt-Geschwindigkeitsmeßgerät nach einem der Ansprüche 5 bis 7, dadurch gekennzeichnet, daß die Ausgangsanschlüsse des ersten (31) und des zweiten (32) passiven Detektors mit der Einkoppel/Auskoppeleinrichtung für die elektromagnetische Welle über ein UND-Gatter (330) verbunden sind.

9. Dopplereffekt-Geschwindigkeitsmeßgerät nach einem der vorangehenden Ansprüche, dadurch gekennzeichnet, daß es außerdem eine Einrichtung zum Unterscheiden von Fahrzeugen in Abhängigkeit von ihrer Abmessung in Passierrichtung (L) und ihrer Geschwindigkeit (v) enthält.

10. Dopplereffekt-Geschwindigkeitsmeßgerät nach Anspruch 9, dadurch gekennzeichnet, daß die Unterscheidungseinrichtung eine Einrichtung zum Berechnen der Länge in Passierrichtung L enthält, welche die Beziehung erfüllt:

$$L = \frac{2\,N\,\lambda}{2\,\cos\,\alpha} - d,$$

wobei
- λ die Emissionswellenlänge der elektromagnetischen Welle darstellt,
- N die Anzahl der Perioden des Dopplersignals während des Durchquerens des Strahlbündels der elektromagnetischen Welle durch das Fahrzeug darstellt,
- α den Winkel darstellt, der von der Passierrichtung des Fahrzeugs mit der Visierachse der elektromagnetischen Welle gebildet wird,
- d die mittlere Abmessung des Strahlbündels der elektromagnetischen Welle (FOEM) der Empfangskeule (LR) in Richtung der Bewegung (D) des Fahrzeugs (V) darstellt.

11. Dopplereffekt-Geschwindigkeitsmeßgerät nach einem der vorangehenden Ansprüche, dadurch gekennzeichnet, daß es weiterhin umfaßt:
- eine Einrichtung (22) zum Messen der Passierzeit ($T_{AB}$) des Fahrzeugs in dem Strahlbündel der elektromagnetischen Welle zwischen den Zeitpunkten des Eintritts ($t_A$) und des Austritts ($t_B$) des Fahrzeugs in bzw. aus der Empfangskeule des passiven Aufnehmers,
- eine Einrichtung (23) zum Berechnen der effektiven Abmessung des Strahlbündels der elektromagnetischen Welle (FOEM) oder der Empfangskeule (LR) in Richtung der Bewegung (D) des Fahrzeugs (V).

12. Dopplereffekt-Geschwindigkeitsmeßgerät nach einem der Ansprüche 10 oder 11, dadurch gekennzeichnet, daß die Einrichtung zur Unterscheidung der Fahrzeuge hinsichtlich der Geschwindigkeit ein Programm zum Sortieren und Verteilen der Fahrzeuge auf Geschwindigkeitsbereiche mit einer Breite umfaßt, die zwischen einer unteren Geschwindigkeitsschwelle und einer oberen Geschwindigkeitsschwelle festgelegt ist.

FOEM
LR

$T_{AB} = t_A - t_B$

FIG_1

FIG_2a

FIG_2b

FIG - 3

FIG_4

REPARTITION EN VITESSES

| TRANCHE DE VITESSE | NOMBRE DE VEHICULES |
|---|---|
| < à 50 Km / h | |
| 50 à 60 Km / h | |
| 60 à 70 Km / h | |
| 70 à 80 Km / h | |
| 80 à 90 Km / h | |
| 90 à 100 Km / h | |
| 100 à 110 Km / h | |
| 110 à 120 Km / h | |
| 120 à 130 Km / h | |
| 130 a 140 Km / h | |
| 140 a 150 Km / h | |
| > a 160 Km / h | |

FIG_5

EP 0 308 324 B1